(19) Europäisches Patentamt
European Patent Office
Office européen des brevets

(11) **EP 2 203 338 B1**

(12) **EUROPÄISCHE PATENTSCHRIFT**

(45) Veröffentlichungstag und Bekanntmachung des Hinweises auf die Patenterteilung:
**09.11.2011 Patentblatt 2011/45**

(21) Anmeldenummer: **08803959.9**

(22) Anmeldetag: **10.09.2008**

(51) Int Cl.:
**B60W 10/06** (2006.01)   **B60W 10/08** (2006.01)
**B60W 30/18** (2006.01)   **B60K 6/485** (2007.10)

(86) Internationale Anmeldenummer:
**PCT/EP2008/061992**

(87) Internationale Veröffentlichungsnummer:
**WO 2009/053152 (30.04.2009 Gazette 2009/18)**

(54) **VERFAHREN ZUM BETREIBEN EINER HYBRIDANTRIEBSVORRICHTUNG**

METHOD FOR OPERATING A HYBRID DRIVE UNIT

PROCÉDÉ DE FONCTIONNEMENT D'UN DISPOSITIF D'ENTRAÎNEMENT HYBRIDE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.10.2007 DE 102007050113**

(43) Veröffentlichungstag der Anmeldung:
**07.07.2010 Patentblatt 2010/27**

(73) Patentinhaber: **Robert Bosch GmbH**
**70442 Stuttgart (DE)**

(72) Erfinder: **FALKENSTEIN, Jens-Werner**
**73434 Aalen (DE)**

(56) Entgegenhaltungen:
DE-A1- 4 344 633         DE-A1- 10 261 278
DE-A1-102004 014 102     DE-A1-102005 060 858
DE-A1-102006 016 133

**Beschreibung**

Die Erfindung betrifft ein Verfahren zum Betreiben einer Hybridantriebsvorrichtung, eines Fahrzeugs, insbesondere Kraftfahrzeugs, mit mindestens einem Verbrennungsmotor und mindestens einer Elektromaschine als Antriebsaggregate, die miteinander mechanisch gekoppelt sind.

**Stand der Technik**

Antriebsvorrichtungen, die sowohl einen Verbrennungsmotor als auch eine elektrische Maschine aufweisen, sind bekannt und werden im Allgemeinen als Hybridantriebsvorrichtung bezeichnet. Der Verbrennungsmotor und die Elektromaschine sind dabei direkt oder über eine Kupplung miteinander mechanisch gekoppelt, sodass sich ihre Drehmomente zu einem (Gesamt-) Antriebsdrehmoment der Antriebsvorrichtung addieren. Derartige Antriebsvorrichtungen sind beispielsweise aus der DE 10 2004 044 507 A1 und der DE 10 2005 018 437 A1 bekannt.

Aus der gattungsbildenden DE 10 2005 060 858 ist ein Hybridantriebstrang und eine Ansteuerung der Antriebsaggregate in Abhängigkeit eines Summen-Solldrehmomentes (trgDes) bekannt.

Aus der DE 10 2006 016 133 ist ein Hybridantriebsstrang und eine Ansteuerung dessen Antriebsaggregate bekannt. Es sind eine Vielzahl an Betriebsmodi vorgesehen. Die Ansteuerung der Antriebsaggregate erfolgt in Abhängigkeit des aktuell vorliegenden Betriebsmodus. Insbesondere werden die Drehmomentgrenzen der Antriebsaggregate in Abhängigkeit des aktuellen Betriebsmodus angepasst.

Bei der Vorgabe von Soll-Drehmomenten für die Antriebsaggregate werden dabei häufig Drehmomente der Antriebsaggregate ermittelt. Aufgrund von Ungenauigkeiten von entsprechenden Stellern und Sensoren kann jedoch das ermittelte Drehmoment eines Antriebsaggregats dauerhaft, insbesondere bei hohen Drehmomenten von dem ihm vorgegebenen Soll-Drehmoment abweichen. Üblicherweise ist dabei vorgesehen, die Abweichung des Drehmoments eines Antriebsaggregats von dem ihm vorgegebenen Soll-Drehmoment zu kompensieren. Insbesondere bei Hybridantriebsvorrichtungen wird häufig die Elektromaschine dazu verwendet, Drehmomentabweichungen des Verbrennungsmotors zu kompensieren, da die Elektromaschine im Vergleich zum Verbrennungsmotor eine wesentlich höhere Dynamik aufweist. Dies führt jedoch dazu, dass dauerhafte Abweichungen dauerhaft durch die Elektromaschine ausgeglichen werden. Hierdurch kann beispielsweise eine vorgegebene Ladestrategie für das elektrische Bordnetz des Fahrzeugs im zeitlichen Mittel nicht eingehalten werden, wodurch das elektrische Bordnetz nicht mehr ausreichend oder zu stark mit elektrischer Energie versorgt wird.

Weiterhin steht für eine schnelle Drehmomentänderung zum Ausgleichen einer Drehmomentabweichung ein Verstellen des Zündwinkels des Verbrennungsmotors zur Verfügung. Insbesondere durch eine Spätverstellung des Zündwinkels des Verbrennungsmotors kann sein Ist-Drehmoment schnell reduziert werden. Dies führt allerdings zu erhöhten Emissionen verbunden mit einem erhöhten Kraftstoffverbrauch. Ein dauerhafter Ausgleich von Drehmomentungenauigkeiten durch Eingriffe in den Zündwinkel ist daher zwar prinzipiell möglich, mach jedoch aus den oben genannten (Wirkungsgrad-) Gründen wenig Sinn.

Offenbarung der Erfindung

Erfindungsgemäß ist ein Verfahren gemäß Anspruch 1 Betreiben einer Hybridantriebsvorrichtung, eines Fahrzeugs, insbesondere Kraftfahrzeugs, mit mindestens einem Verbrennungsmotor und mindestens einer Elektromaschine als Antriebsaggregate, die miteinander mechanisch gekoppelt sind, vorgesehen, wobei in Abhängigkeit von einer Drehmomentanforderung, insbesondere einer gefilterten Drehmomentanforderung, in einem Normalbetrieb der Antriebsvorrichtung den Antriebsaggregaten jeweils ein für das jeweilige Antriebsaggregat ideales Soll-Drehmoment und in einem Dynamikbetrieb jeweils ein, zusammen die Drehmomentanforderung erfüllendes Soll-Drehmoment vorgegeben wird. Unter dem Normalbetrieb ist hierbei ein quasistationärer Normalbetrieb der Antriebsvorrichtung zu verstehen. Es ist also vorgesehen, dass im Normalbetrieb den Antriebsaggregaten jeweils ein für das jeweilige Antriebsaggregat ideale Soll-Drehmoment vorgegeben wird. Dies führt dazu, dass das jeweilige Antriebsaggregat insbesondere in Bezug auf Kraftstoffverbrauch, eine Ladestrategie und/oder w Schadstoffemissionen ideal betrieben wird, wobei durch das Betreiben mit idealen Soll-Drehmomenten das gesamte zu stellende Antriebs-Solldrehmoment von der Drehmomentanforderung abweicht beziehungsweise abweichen kann, da nunmehr Ungenauigkeiten von Stellern und/oder Sensoren zur Einstellung und/oder Erfassung eines Drehmoments eines der Antriebsaggregate (welches ein ideales Soll-Drehmoment beeinflusst) nicht weiter berücksichtigt werden. Ein weiterer, wesentlicher Vorteil liegt darin, dass im Normalbetrieb eine Ladestrategie für ein elektrisches Bordnetz des Fahrzeugs beziehungsweise für einen der Elektromaschine zugeordneten elektrischen Speicher eingehalten wird. Im Dynamikbetrieb hingegen, wie bereits erwähnt, werden den Antriebsaggregaten Soll-Drehmomente vorgegeben, die zusammen die Drehmomentanforderung erfüllen. Die Drehmomentanforderung kann beispielsweise einem Fahrerwunschmoment entsprechen, das dieser beispielsweise mittels eines Fahrpedals vorgibt. Natürlich ist es auch denkbar, dass die Drehmomentanforderung durch ein anderes System des Fahrzeugs, wie zum Beispiel ein Geschwindigkeitsregelsystem, erfolgt. Im Dynamikbetrieb entspricht das zu stellende (Gesamt-)Antriebs-Solldrehmoment somit der Drehmomentanforderung. Hierdurch wird ein Fahrkomfort für den Fahrer gewährleistet, insbesondere da die Antriebsvorrichtung das Fahrerwunschmoment beziehungsweise die Drehmomentanforderung exakt erfüllt.

Erfindungsgemäß werden die idealen Soll-Drehmomente in Abhängigkeit von den aktuellen Betriebszuständen der Antriebsaggregate, der Antriebsvorrichtung und/oder eines elektrischen Bordnetzes des Fahrzeugs vorgegeben. Dadurch werden die idealen Soll-Drehmomente derart vorgegeben, dass beispielsweise der Kraftstoffverbrauch in Abhängigkeit der Betriebstemperatur des Verbrennungsmotors und/oder des Ladezustands des elektrischen Speichers optimal eingestellt wird.

Erfindungsgemäß wird weiter im Dynamikbetrieb zumindest einem der Antriebsaggregate ein Kompensations-Soll-Drehmoment zum Ausgleich einer Abweichung des Antriebs-Solldrehmoments von der Drehmomentanforderung vorgegeben. Hierbei ist also vorgegeben, dass im Dynamikbetrieb, wenn beispielsweise die ideal vorgegebenen Soll-Drehmomente zusammen von der Drehmomentanforderung abweichen, mindestens eines der Antriebsaggregate mit einem Kompensations-Soll-Drehmoment beaufschlagt wird, welches dazu dient, diese Abweichung zwischen dem zu stellenden Antriebs-Solldrehmoment (Gesamt-Antriebs-Solldrehmoment) und der Drehmomentanforderung auszugleichen beziehungsweise zu kompensieren, sodass die Soll-Drehmomente der Antriebsaggregate zusammen die Drehmomentanforderung exakt erfüllen. Alternativ dazu ist es denkbar, die idealen Soll-Drehmomente für die einzelnen Antriebsaggregate derart vorzugeben, dass ausgehend von einer Drehmomentanforderung und in Abhängigkeit vom Betriebszustand der Antriebsvorrichtung und/oder der Antriebsaggregate den Antriebsaggregaten ein Optimierungs-Soll-Drehmoment zum Einstellen der idealen Soll-Drehmomente vorgegeben wird.

Vorteilhafterweise wird der Dynamikbetrieb durch Erfassen des zeitlichen Verlaufs mindestens eines der von Soll-Drehmomente ermittelt. Durch Erfassen des zeitlichen Verlaufs eines der Soll-Drehmomente wird ein Drehmomentgradient ermittelt. Durch Ermittlung dieses Drehmomentgradienten kann bestimmt werden, ob die Antriebsvorrichtung in einem Normalbetrieb oder in einem Dynamikbetrieb betrieben werden soll beziehungsweise betrieben wird.

Bevorzugt wird der Dynamikbetrieb in Abhängigkeit mindestens eines vorgebbaren Schwellenwerts ermittelt. Dieser Schwellenwert ist beispielsweise ein Drehmomentgradienten-Schwellenwert, wobei bei Überschreiten des Drehmomentengradienten-Schwellenwerts bestimmt wird, dass die Antriebsvorrichtung im Dynamikbetrieb betrieben wird/werden soll. Kleinere Drehmomentänderungen beziehungsweise -anforderungen werden somit im Wesentliche unterdrückt, sodass sie sich nicht auf den Kraftstoffverbrauch, die Emissionen und/oder die Ladestrategie des Fahrzeugs auswirken.

Zweckmäßigerweise wird der Schwellenwert in Abhängigkeit eines momentanen Betriebszustands der Antriebsvorrichtung vorgegeben. Wobei der Schwellenwert in Abhängigkeit der gesamten Antriebsvorrichtung oder in Abhängigkeit des Betriebszustandes einer oder mehrerer Antriebsaggregate der Antriebsvorrichtung vorgegeben werden kann. So kann zum Beispiel bei der Vorgabe des Schwellenwerts der Ladezustand des der Elektromaschine zugeordneten elektrischen Speichers, der Betriebszustand zumindest eines Antriebsaggregats und/oder ein eingelegter Gang eines Getriebes der Antriebsvorrichtung berücksichtigt werden.

Daneben kann ein für den Fahrkomfort wichtiger Betriebszustand wie ein Nulldurchgang eines Getriebeausgangsmoments den Schwellenwert beeinflussen. Auch beim Notlauf eines Antriebsaggregats (beispielsweise bei Defekten von Stellern oder Sensoren), kann der Schwellenwert modifiziert werden, bis hin zur vollständigen Deaktivierung des Dynamikbetriebs.

Weiterhin ist vorgesehen, dass das zu stellende Antriebs-Solldrehmoment zumindest bei einem Übergang vom Normalbetrieb zum Dynamikbetrieb sprungfrei vorgegeben wird. Dadurch werden plötzliche Drehmomentspitzen auf den Antriebsstrang vermieden und der Komfort für die Insassen des Fahrzeugs erhöht.

Vorteilhafterweise werden die Soll-Drehmomente der Antriebsaggregate im Normalbetrieb, im Dynamikbetrieb und/oder beim Übergang vom Normal- in den Dynamikbetrieb sprungfrei vorgegeben.

Nach einer vorteilhaften Weiterbildung der Erfindung wird im Normalbetrieb der Gradient des zu stellenden Antriebs-Solldrehmoments innerhalb eines vorgebbaren Toleranz-bandes um den Gradienten der Drehmomentanforderung vorgegeben, wobei eine temporäre Abweichung des Soll-Drehmoments mindestens eines der Antriebsaggregate von dem idealen Soll-Drehmoment vorteilhafterweise toleriert wird. Damit kann ein komfortables Ansprechen auf eine Fahrvorgabe beziehungsweise Drehmomentanforderung sichergestellt werden. Daneben werden Sprünge in dem Gradienten des zu stellenden Antriebs-Solldrehmoments bei Übergängen zwischen den Betriebsarten reduziert.

Weiterhin ist vorgesehen, dass während eines Nulldurchgangs der Drehmomentanforderung das zu stellende Antriebs-Solldrehmoment der Drehmomentanforderung gleichgesetzt wird. Zweckmäßigerweise wird eine Verrampung, die das sprungfreie Vorgeben der Soll-Drehmomente ermöglicht, derart eingestellt, dass während des Nulldurchgangs der Drehmomentanforderung das zu stellende Antriebs-Solldrehmoment der Drehmomentanforderung beziehungsweise der gefilterten Drehmomentanforderung bereits genau entspricht.

Schließlich ist vorgesehen, dass bei Erfassung einer externen Drehmomentbeeinflussung im Normalbetrieb in den Dynamikbetrieb gewechselt wird. Hierdurch wird verhindert, dass beispielsweise bei Hinzuschalten von Zusatzaggregaten, wie zum Beispiel einem Klimakompressor, was sich sensitiv auf das Betriebsverhalten der Antriebsvorrichtung auswirkt, eine Drehmomentanforderung unzureichend umgesetzt wird, oder dass Fahrstabilitätseingriffe (ESP) oder Eingriffe von automatisierten Schaltgetrieben unzureichend umgesetzt werden.

Kurze Beschreibung der Zeichnungen

Im Folgenden soll die Erfindung anhand einiger Figuren näher erläutert werden. Dazu zeigen:

Figur 1      eine schematische Darstellung eines Ausführungsbeispiels des vorteilhaften Verfahrens,

Figur 2      ein Ausführungsbeispiel des vorteilhaften Verfahrens,

Figur 3      ein weiteres Ausführungsbeispiel des vorteilhaften Verfahrens und

Figur 4      ein weiteres Ausführungsbeispiel des vorteilhaften Verfahrens.

Ausführungsform(en) der Erfindung

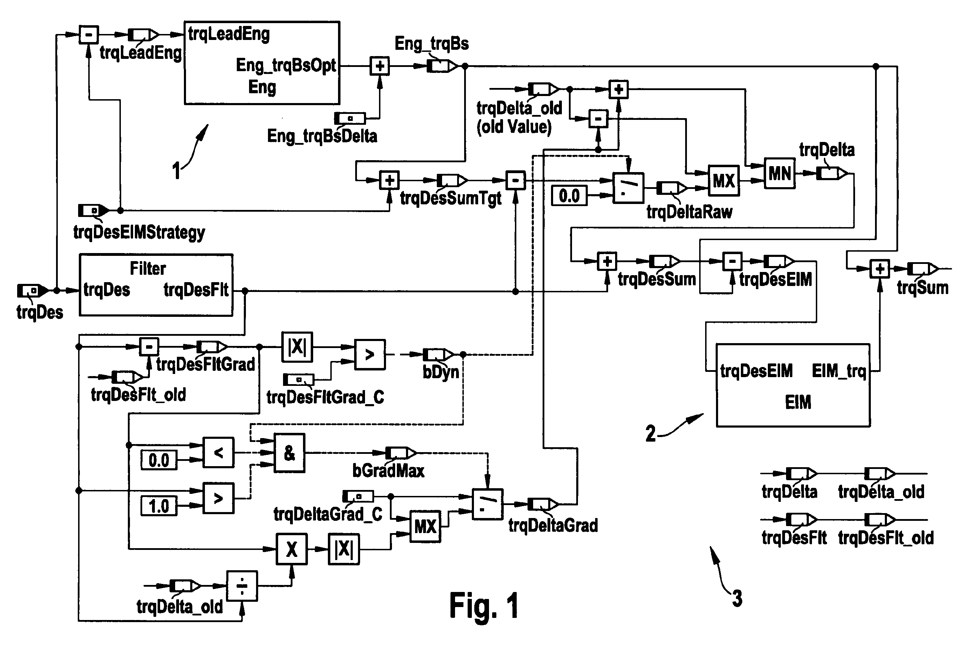

In den Figuren 1 bis 4 ist ein Ausführungsbeispiel für das erfindungsgemäße Verfahren dargestellt. Es wird ausgegangen von einem Verbrennungsmotor 1 (Ottomotor) mit Saugrohreinspritzung, elektronischem Gaspedal (E-Gas, elektronische Drosselklappe) und Katalysator. Ein Schwungrad des Verbrennungsmotors 1 ist mit einer Elektromaschine 2 gekoppelt (Kurbelwellenstartergenerator). Der Verbrennungsmotor 1 und die Elektromaschine 2 bilden zusammen eine Antriebsvorrichtung 3 eines Kraftfahrzeugs.

Moderne Ottomotoren besitzen meist eine elektronische Drosselklappe zur Luftmassenstromregulierung, die von der Motorsteuerung angesteuert wird. Das in Figur 1 dargestellte Vorhalte-Sollmoment für den Verbrennungsmotor *trqLeadEng* wirkt auf einen Luftpfad. Ein Luftmassenstrom wird durch geeignete Ansteuerung der Drosselklappe entsprechend eingestellt. Bei idealem Zündwinkel erzeugt der Verbrennungsmotor 1 das als Basismoment bezeichnete Drehmoment *Eng_trqBs.* Im instationären Betrieb wirken dynamische Füllungseffekte im Saugrohr (Saugrohrdynamik), die Übertragung vom Vorhalte-Sollmoment *trqLeadEng* auf das Basismoment *Eng_trqBs* lässt sich näherungsweise mittels Reihenschaltung eines Totzeitgliedes und eines Verzögerungsglieds erster Ordnung (PT1) beschreiben. Die Motorsteuerung eines modernen Verbrennungsmotors 1 kann das momentane Basismoment *Eng_trqBs* anhand von gemessenen und abgeschätzten Größen ermitteln, zum Beispiel aus Motordrehzahl, Saugrohrdruck beziehungsweise dem Signal eines Luftmassensensors und so weiter.

Aufgrund von Ungenauigkeiten von Stellern und Sensoren kann das Basismoment *Eng_trqBs* dauerhaft vom Vorhalte-Sollmoment *trqLeadEng* abweichen, insbesondere bei hohen Drehmomenten.

Im Verfahren nach Figur 1 sind das Totzeitverhalten und das Verzögerungsverhalten im Block "Eng" modelliert Die Größe *Eng_trqBsDelta* bildet eine dauerhafte Ungenauigkeit im Basismoment *Eng_trqBs* des Verbrennungsmotors 1 nach.

Die Drehmomentansteuerung einer modernen Elektromaschine 2 weist eine sehr viel höhere Dynamik im Vergleich mit der Saugrohrdynamik eines Verbrennungsmotors 1 auf, im Verfahren nach Figur 1 wird die Verzögerung in der Drehmomentansteuerung der Elektromaschine vernachlässigt, das Istmoment *EIM_trq* entspricht näherungsweise dem Sollmoment *trqDesEIM* (Block "EIM").

Aufgrund der hohen Dynamik der Elektromaschine 2 kann diese vorteilhaft eingesetzt werden, um zum Beispiel bei Änderung eines Antriebssollmoments eine aufgrund der Saugrohrdynamik verzögerte Momentenänderung beim Verbrennungsmotor zu kompensieren. Dies wird als Instationärausgleich bezeichnet und ermöglicht eine hohe Dynamik des Antriebs. Die Saugrohrdynamik ist meist stark vom Betriebspunkt des Verbrennungsmotors abhängig, eine Modellierung bildet die Realität nur unzureichend ab. Eine reine Steuerung ist somit nicht möglich, für den Instationärausgleich muss das von der Steuerung anhand vom gemessenen Größen ermittelte Basismoment *Eng_trqBs* benutzt werden. Bei parallelhybridischen Antrieben kann eine Elektromaschine direkt mit dem Schwungrad des Verbrennungsmotors gekoppelt sein. Ein einfacher Ansatz für den Instationärausgleich bei entsprechenden Antrieben besteht darin, das Sollmoment für die Elektromaschine *trqDesEIM* aus der Differenz von (evtl gefiltertem) Antriebssollmoment *trqDesFlt* für den gesamten Antrieb (zum Beispiel von Fahrer bzw. Fahrerassistenzsystemen) und dem Basismoment *Eng_trqBs* zu berechnen:

$$trqDesEIM = trqDesFlt - Eng\_trqBs$$

Die Elektromaschine gleicht dann einen verzögerten Auf- bzw. Abbau des Basismomentes aus.

Das Vorhalte-Sollmoment *trqLeadEng* kann so gewählt werden, dass die Elektromaschine ein vorgegebenes Strategiesollmoment (Ladesollmoment) *trqDesEIMStrategy* näherungsweise einstellt, zum Beispiel mittels:

$$trqLeadEng = trqDesFlt - trqDesEIMStrategy$$

Allerdings wirken sich dauerhaft vorhandene Ungenauigkeiten im Basismoment (beziehungsweise Abweichungen des Basismomentes *Eng_trqBs* vom Vorhalte-Sollmoment *trqLeadEng)* auf die Elektromaschine aus. Dies führt dazu, dass die Elektromaschine 2 Ungenauigkeiten des Verbrennungsmotors 1 dauerhaft kompensiert und dadurch ein vorgegebenes Strategiesollmoment (Ladesollmoment) *trqDesEIMStrategy* im zeitlichen Mittel nicht einhält. Dann wird ein elektrisches Bordnetz nicht mehr ausreichend oder zu stark mit elektrischer Energie versorgt.

Für eine (schnelle) Reduzierung des Antriebssollmoments *trqDesFlt steht* neben Eingriffen auf das Sollmoment *trqDesEIM* der Elektromaschine auch eine Spätverstellung des Zündwinkels zur Verfügung, allerdings verbunden mit erhöhtem Verbrauch und erhöhten Emissionen. Für Eingriffe in den Zündwinkel besteht aufgrund der dabei hohen möglichen Dynamik eine Analogie zu Eingriffen in das Sollmoment *trqDesEIM* der Elektromaschine. Die dauerhafte Kompensation eines infolge von Ungenauigkeiten zu hohen Basismoments durch Zündwinkeleingriffe ist prinzipiell möglich, macht aus Wirkungsgradgründen allerdings wenig Sinn.

Das erfindungsgemäß Verfahren sieht vor, in einem Normalbetrieb (keine externen Eingriffe aktiv) der Antriebsvorrichtung den Verbrennungsmotor 1 bei einem momentan idealen Drehmoment *(Eng_trqBs)* und die Elektromaschine(n) bei momentan idealen Drehmomenten *(trqDesEIMStrategy)* zu betreiben und dabei mit dem von Verbrennungsmotor 1 und Elektromaschine(n) 2 gemeinsam zu stellenden Antriebs-Solldrehmoment *trqDesSum* von einem vorgegebenen (eventuell gefilterten) Antriebssollmoment trqDesFlt, das einer Drehmomentanforderung, beispielsweise von dem Fahrer, entspricht, abzuweichen, während bei einem Dynamikbetrieb, insbesondere ohne externe Eingriffe, durch Abweichen eines oder mehrerer Aggregate von den momentan idealen Drehmomenten das zu stellende Antriebs-Solldrehmoment *trqDesSum* dem vorgegebenen Antriebssollmoment *trqDesFlt* genau entspricht. Dabei wird der Dynamikbetrieb anhand des zeitlichen Verlaufes eines oder mehrerer Drehmomente detektiert.

Vorteilhaft ist weiterhin, wenn die Verrampung des zu stellenden Antriebs-Solldrehmoments *trqDesSum* beim Übergang in den Dynamikbetrieb so erfolgt, dass während eines Nulldurchgangs des Antriebssollmoments *trqDesFlt* das zu stellende Antriebs-Solldrehmoment *trqDesSum* dem vorgegebenen Antriebssollmoment *trqDesFlt* bereits genau entspricht.

Vorteilhaft ist darüber hinaus, wenn die Solldrehmomente für die einzelnen Aggregate in den Betriebsarten Normalbetrieb und Dynamikbetrieb sowie bei Übergangen zwischen diesen beiden Betriebsarten verrampt beziehungsweise sprungfrei vorgegeben werden.

Bei idealem Zündwinkel entspricht ein Istdrehmoment des Verbrennungsmotors 1 einem Basismoment *Eng_trqBs.* Das Basismoment stellt das momentan ideale Drehmoment des Verbrennungsmotors 1 dar. Für das Ausführungsbeispiel werden Zündwinkeleingriffe aufgrund der Analogie zu Eingriffen mit der Elektromaschine 2 nicht betrachtet. Das dargestellte Verfahren lässt sich bei Hybridfahrzeugen um Zündwinkeleingriffe erweitern. Bei konventionellen Fahrzeugen kann das dargestellte Verfahren ebenso eingesetzt werden, indem Eingriffe in ein Soll-Drehmoment *trqDesEIM* der Elektromaschine durch Eingriffe in ein Soll-Drehmoment für die Zündwinkelkoordination des Verbrennungsmotors ersetzt werden. Die ist allerdings nicht Teil der Erfindung.

Der Einfachheit halber gelten für das Ausführungsbeispiel folgende Annahmen:

1. Ein Antriebssollmoment *trqDes* ist so gewählt, dass Elektromaschine 2 und Verbrennungsmotor 1 innerhalb ihrer erlaubten Betriebsbereiche betrieben werden. Maßnahmen für Begrenzungen, falls das Antriebssollmoment diese Forderung nicht erfüllt, sind nicht dargestellt.

2. Es erfolgt kein Zündwinkeleingriff am Verbrennungsmotor 1, das Basismoment *Eng_trqBs* entspricht dem Istdrehmoment des Verbrennungsmotors 1. Maßnahmen zur Koordination von Zündwinkeleingriffen sind nicht dargestellt.

Das Istdrehmoment des Verbrennungsmotors *Eng_trqBs* und ein Istdrehmoment der Elektromaschine 2 *EIM_trq* addieren sich zum Istdrehmoment *trqSum* der gesamten Antriebsvorrichtung.

Ein Antriebssollmoment *trqDes* für den gesamten Antrieb wird zum Beispiel vom Fahrer beziehungsweise von Fahrerassistenzsystemen, bei externen Eingriffen auch von ESP, automatisierten Schaltgetrieben und so weiter vorgegeben. Aus Komfortgründen wird in einem Block "Filter" daraus ein gefiltertes Antriebssollmoment *trqDesFit* erzeugt, die Filterwirkung kann bei externen Eingriffen modifiziert beziehungsweise abgeschaltet werden.

Daneben wird mit *trqDesFltGrad* eine Differenz des gefilterten Antriebssollmomentes *trqDesFlt* vom vorherigen Rechenschritt des Abtastsystems zum aktuellen Rechenschritt berechnet (Abtastzeit T):

$$trqDesFltGrad(kT) = trqDesFlt(kT) - trqDesFlt[(k-1)T]$$

Ein Speicherelement *trqDesflt_old* enthält den Wert des gefilterten Antriebssollmomentes *trqDesFlt* aus dem vorherigen Rechenschritt:

$$trqDesFlt\_old = trqDesFlt[(k-1)T]$$

Die Größe *trqDesFitGrad* beschreibt den "Gradienten" des gefilterten Antriebssollmoments *trqDesFlt.*

Eine nicht näher beschriebene Betriebsstrategie ermittelt ein Strategie-Sollmoment *trqDesElMStrategy* für die Elektromaschine 2, bei dem die Leistungsanforderung eines elektrischen Bordnetzes erfüllt wird. Das Vorhalte-Sollmoment *trqLeadEng* für den Verbrennungsmotor 1 wird so berechnet, dass gilt:

$$trqDesElMStrategy + trqLeadEng = trqDes.$$

Die Übertragung vom Vorhalte-Sollmoment *trqLeadEng* auf ein Basismoment ohne Ungenauigkeiten *Eng_trqBsOpt* ist mittels Reihenschaltung eines Totzeitgliedes und eines Verzögerungsglieds erster Ordnung (PT1) beschreiben (Block "Eng"). Die Größe *Eng_trqBsDelta* modelliert eine additive Ungenauigkeit im Basismoment *Eng_trqBs* des Verbrennungsmotors 1.

Ein ideales Antriebssollmoment *trqDesSumTgt* ergibt sich durch Addition der momentan idealen Drehmomente des Verbrennungsmotors 1 *Eng_trqBs* und der Elektromaschine *2 trqDesElMStrategy:*

$$trqDesSumTgt = Eng\_trqBs + trqDesElMStrategy.$$

Sind keine externen Eingriffe aktiv, wird im Ausführungsbeispiel der „Gradient" (Änderung zwischen zwei Rechenschritten) *trqDesFltGrad* des gefilterten Antriebssollmomentes (= Drehmomentanforderung) *trqDesFlt* zur Detektierung des Dynamikbetriebs herangezogen. Wird *trqDesFltGrad* betragsmäßig größer als ein (positiver) Schwellenwert *trqDesfltGrad_* C, liegt mit dem Aktivierungssignal *bDyn* = true ein Dynamikbetrieb vor, andernfalls mit *bDyn* = false ein (quasistationärer) Normalbetrieb.

Auch andere Bedingungen zur Detektierung des Dynamikbetriebs sind möglich. Zum Beispiel kann ein Dynamikbetrieb erkannt werden, wenn die betragsmäßige Abweichung der Drehmomentanforderung beziehungsweise des gefilterten Antriebssollmomentes *trqDesFlt* vom ungefilterten Antriebssollmoment *trqDes* einen "vorgegebenen" Schwellenwert überschreitet.

Abhängig vom Aktivierungssignal *bDyn* wird ein Zielwert *trqDeltaRaw* für ein verramptes Deltamoment *trqDelta* ermittelt. Das Deltamoment *trqDelta* folgt dem Zielwert *trqDeltaRaw* mit einer zulässigen Rampensteigung, die mit der (positiven) Grenze *trqDelta Grad_* C betragsmäßig limitiert ist:

$$trqDelta(kT) =$$

$$\mathbf{MIN}[(MAX[trqDeltaRaw(kT), (trqDelta[(k-1)T] - trqDeltaGrad\_C)]),$$
$$(trqDelta[(k-1)T] + trqDeltaGrad\_C)]$$

Das Speicherelement *trqDelta_old* enthält den Wert des Deltamoments *trqDelta* aus dem vorherigen Rechenschritt:

$$trqDelta\_old = trqDelta[(k\text{-}1)T].$$

**(Quasistationärer) Normalbetrieb:**

Mit *bDyn* = false ergibt sich der Zielwert *trqDeltaRaw* für das verrampte Deltamoment *trqDelta* aus der Differenz:

$$trqDeltaRaw = trqDesSumTgt \text{ - } trqDesFlt.$$

Im eingeschwungenen Zustand entspricht das verrampte Deltamoment *trqDelta* dem Rohwert *trqDeltaRaw,* und damit das zu stellende Antriebs-Solldrehmoment *trqDesSum* dem idealen Antriebssollmoment *trqDesSumTgt.* Ungenauigkeiten im Basismoment wirken sich auf das zu stellende Antriebs-Solldrehmoment *trqDesSum* und auf das Summenistmoment *trqSum* aus. Der Verbrennungsmotor 1 wird beim momentan idealen Drehmoment *Eng_trqBs* und die Elektromaschine 2 beim momentan idealen Drehmoment *trqDesEIMStrategy* betrieben:

$$trqDesEIM = trqDesEIMStrategy.$$

Die Elektromaschine 2 erfüllt trotz Ungenauigkeiten im Basismoment die Leistungsanforderung eines elektrischen Bordnetzes.

Im Folgenden wird eine Änderung im gefilterten Antriebssollmoment *trqDesFlt* aus dem eingeschwungenen Zustand heraus betrachtet, wobei *trqDesEIMStrategy* nicht verändert wird. Das Basismoment *Eng_trqBs* ändert sich aufgrund der verzögernden Wirkung der Luftpfaddynamik zunächst nicht, damit bleibt auch das ideale Antriebssollmoment *trqDesSum Tgt* näherungsweise konstant. Liegt unter diesen Voraussetzungen der "Gradient" (Änderung zwischen zwei Rechenschritten) *trqDesFltGrad* des gefilterten Antriebssollmomentes *trqDesFlt* betragsmäßig unterhalb der (positiven) Grenze *trqDeltaGrad_C:*

$$|trqDesFltGrad| \leq trqDeltaGrad\_C,$$

so gilt dies auch für den "Gradienten" des Rohwerts *trqDeltaRaw:*

$$| trqDeltaRaw (kT) \text{ - } trqDeltaRaw [(k\text{-}1)T]| \leq trqDeltaGrad\_C.$$

In diesem Fall entspricht das verrampte Deltamoment *trqDelta* weiterhin dem Rohwert *trqDeltaRaw* und das zu stellende Antriebs-Solldrehmoment *trqDesSum* weiterhin dem idealen Antriebssollmoment *trqDesSumTgt.* Übersteigt der "Gradient" *trqDesFltGrad* des gefilterten Antriebssollmomentes *trqDesFlt* betragsmäßig die Grenze für die maximale Rampensteigung *trqDeltaGrad_C:*

$$|trqDesFltGrad| > trqDeltaGrad\_C,$$

so wirkt sich dies auf das zu stellende Antriebs-Solldrehmoment *trqDesSum* aus.

Im allgemeinen Fall gilt für den "Gradienten" *trqDesSumGrad* des zu stellenden Antriebs-Solldrehmoments *trqDesSum* mit

$$trqDesSumGrad(kT) = trqDesSum(kT) \text{ - } trqDesSum[(k\text{-}1)T]$$

und den Gradienten *trqDesSumTgtGrad* des idealen Antriebssollmoments *trqDesSumTgt* mit

$$trqDesSumTgtGrad\ (kT) = trqDesSumTgt(kT) - trqDesSumTgt[(k\text{-}1)T];$$

$$trqDesSumGrad = trqDesSumTgtGrad$$

falls

$$|trqDesSumTgtGrad\text{-}trqDesFltGrad| \leq trqDeltaGrad\_C$$

und

$$trqDesSumGrad = trqDesFltGrad \text{ - } trqDeltaGrad\_C$$

falls

$$trqDesSumTgtGrad \text{ - } trqDesFltGrad < \text{ - } trqDeltaGrad\_C$$

und

$$trqDesSumGrad = trqDesFltGrad + trqDeltaGrad\_C$$

falls

$$trqDesSumTgtGrad\text{-}trqDesFltGrad > trqDeltaGrad\_C$$

Der "Gradient" *trqDesSumGrad* des zu stellenden Antriebs-Solldrehmoments *trqDesSum* liegt innerhalb eines Toleranzbandes mit den Grenzen $\pm trqDeltaGrad\_C$ um den "Gradienten" *trqDesFltGrad* des vorgegebenen Antriebssollmoments *trqDesFlt*. Eine temporäre Abweichung vom idealen Antriebssollmoment *trqDesSum Tgt* und damit den momentan idealen Drehmomenten *Eng_trqBs, trqDesElMStrategy* wird toleriert, um ein komfortables Ansprechen auf eine Änderung des vorgegebenen Antriebssollmoments *trqDesFlt* (Fahrervorgabe) sicherzustellen.

**Dynamikbetrieb:**

Mit *bDyn* = true ergibt sich der Zielwert *trqDeltaRaw* für das verrampte Deltamoment *trqDelta* zu:

$$trqDeltaRaw = 0.$$

Beim Übergang in den Dynamikbetrieb wird das Deltamoment *trqDelta* auf 0 gerampt und bleibt dann bei 0 stehen. Das zu stellende Antriebs-Solldrehmoment *trqDesSum* entspricht dann dem gefilterten Antriebssollmoment *trqDesFlt*. Ungenauigkeiten im Basismoment wirken sich auf die Elektromaschine 2 aus. Priorität hat aus Komfortgründen die Einhaltung des gefilterten Antriebssollmoments *trqDesFlt*.

**Übergange zwischen den Betriebsarten:**

Das zu stellende Antriebs-Solldrehmoment *trqDesSum* ist aufgrund der Verrampung des Deltamomentes *trqDelta* sprungfrei, falls das gefilterte Antriebssollmoment *trqDesFlt* sprungfrei vorgegeben wird.

Beim Übergang in den Dynamikbetrieb wird das Deltamoment *trqDelta* auf 0 gerampt. Wahrend eines Nulldurchgangs des Getriebeausgangsmomentes, der zu einem Kippen der Motor-Getriebeeinheit in den Lagerungen und damit zu einem Lastschlag im Antriebsstrang führt, wird das Antriebssollmoment *trqDesFlt* meist besonders geformt Beim Nulldurchgang soll das zu stellende Antriebs-Solldrehmoment *trqDesSum* aus Komfortgründen exakt dem Verlauf von *trqDesFlt* folgen, das heißt das Deltamoment soll dann mit *trqDelta* = 0 bereits abgebaut sein.

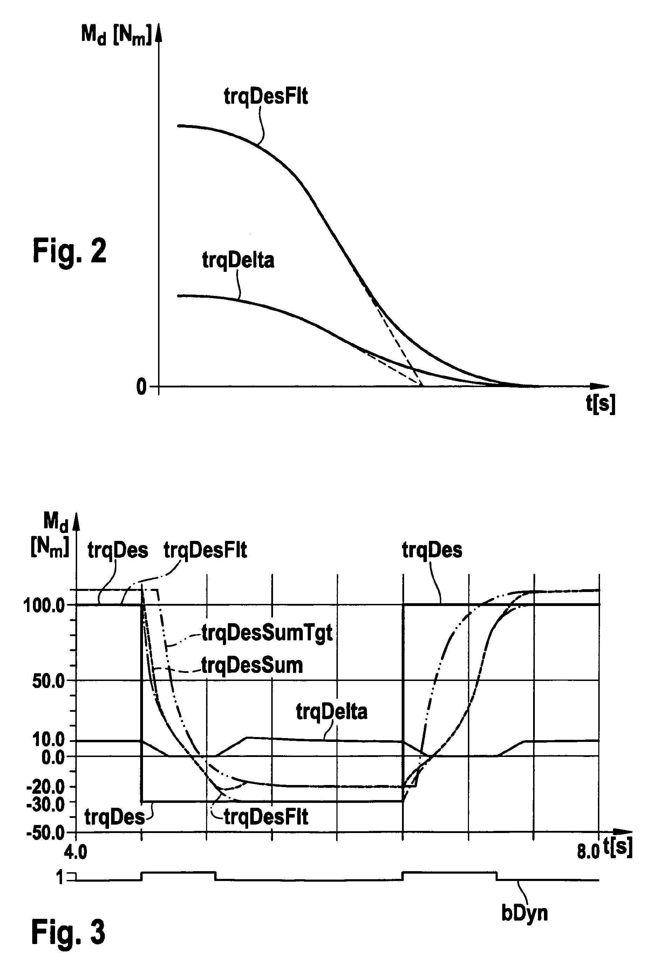

Die Figur 2 verdeutlicht das erfindungsgemäße Vorgehen, um obige Anforderung sicherzustellen, in einem Diagramm, in dem das Drehmoment $M_d$ über die Zeit t aufgetragen ist. Es wird von folgendem Beispiel ausgegangen: *trqDesFlt* und *trqDelta* sind positiv, das heißt es hat kurz zuvor ein Übergang in den Dynamikbetrieb stattgefunden. Der "Gradient" von *trqDesFlt* ist negativ, ein Nulldurchgang des Getriebeausgangsmoments fällt mit einem Nulldurchgang des zu stellenden Antriebs-Solldrehmoments *trqDesSum* zusammen. Die beiden Momente *trqDesFlt* und *trqDelta* werden gleichzeitig 0, wenn sich zu jedem Rechenschritt die Gradienten den Absolutgrößen entsprechend verhalten:

$$(trqDelta(kT) - trqDelta[(k\text{-}1)T]) / trqDelta(kT) =$$
$$(trqDesFlt(kT) - trqDesFlt [(k\text{-}1)T]) / trqDesFlt(kT)$$

Die Gradienten werden in Figur 2 durch die gestrichelt eingetragenen Tangenten symbolisiert, die sich auf der Abszisse (Nullniveau der Momente) schneiden.

Im Dynamikbetrieb, bei positivem *trqDesFlt* (im Beispiel falls *trqDesFlt* > 1 Nm, um einen Division durch 0 zu vermeiden) und negativem "Gradient" *trqDesFltGrad* wird ein Aktivierungssignal *bGradMax* gesetzt, wie in der Figur 1 dargestellt. Entsprechend obigem Zusammenhang wird mittels MAX-Bedingung bei Bedarf die Grenze *trqDelta Grad* für den Betrag der zulässigen Rampensteigung über den Wert des Parameters *trqDeltaGrad_C* hinaus vergrößert Falls erforderlich geht *trqDelta* damit schneller gegen 0 und ist beim Nulldurchgang von *trqDesFlt* mit *trqDelta* = 0 vollständig abgebaut. Dieses Vorgehen ist als Beispiel zu sehen, auch andere Mechanismen sind möglich, zum Beispiel um *trqDelta* bereits eine Zeitspanne vor dem eigentlichen Nulldurchgang von *trqDesFlt* vollständig abzubauen.

**Externe Eingriffe:**

Bei externen Eingriffen, wie zum Beispiel Fahrstabilitätseingriffen (ESP), Eingriffen von automatisierten Schaltgetrieben und so weiter, ist eine schnelle Umsetzung des Antriebssollmoments *trqDesFlt* erforderlich, es erfolgt daher eine sprungartige Änderung des Deltamoments *trqDelta* auf:

$$trqDelta = 0.$$

Eine entsprechende Umschaltung ist in den Figuren nicht gezeigt.

Die Figur 3 zeigt beispielhafte Simulationsergebnisse eines Simulationsmodells nach Figur 1 für sprungfähige Änderungen im ungefilterten Antriebssollmoment *trqDes* zwischen -30 Nm und 100 Nm. Das Antriebssollmoment *trqDesFlt* folgt entsprechend verzögert, deutlich zu erkennen ist der flachere Verlauf im Bereich seines Nulldurchganges, um Lastschläge im Antriebsstrang zu vermeiden. Das Strategie-Sollmoment beträgt während der gesamten Simulation *trqDesEIMStrategy* = -20Nm. Als Ungenauigkeit im Basismoment des Verbrennungsmotors wird *Eng_trqBsDelta* =10 Nm angenommen. Im Normalbetrieb mit *bDyn* = false entspricht das zu stellende Antriebs-Solldrehmoment *trqDesSum* dem idealen Antriebssollmoment *trqDesSumTgt*. Die Elektromaschine 2 wird beim momentan idealen Drehmoment *trqDesEIMStrategy* betrieben und erfüllt die Anforderungen des elektrischen Bordnetzes. Im Dynamikbetrieb mit *bDyn* = true ist das Deltamoment *trqDelta* = 0, das zu stellende Antriebs-Solldrehmoment *trqDesSum* entspricht dann dem gefilterten Antriebssollmoment *trqDesFlt.* Die Übergänge sind verrampt.

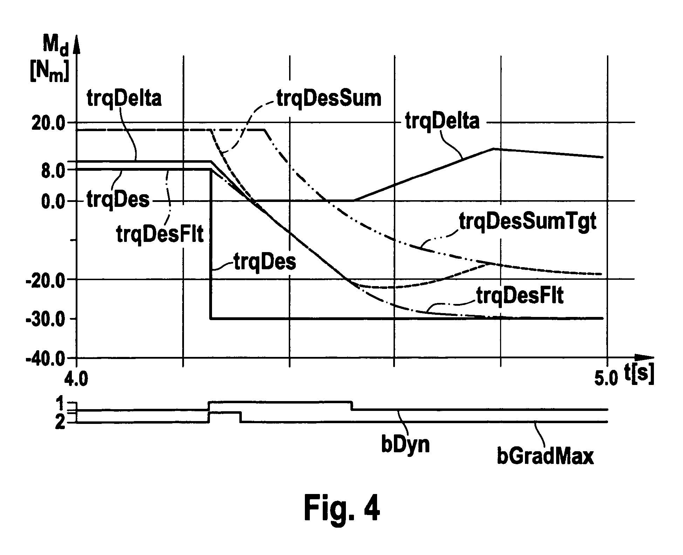

Die Figur 4 zeigt weitere beispielhafte Simulationsergebnisse des Simulationsmodells nach Figur 1. Das ungefilterte Antriebssollmoment *trqDes* springt von 8 Nm auf -30 Nm, das Antriebssollmoment *trqDesFlt* folgt entsprechend verzögert. Beim Aktivierungssignal *bGradMax* = true wird die Grenze *trqDelta Grad* für den Betrag der zulässigen Rampensteigung über den Wert des Parameters *trqdelta Grad_ C* hinaus vergrößert. Das Deltamoment *trqDelta* fällt damit schneller ab und ist beim Nulldurchgang von *trqDesFlt* mit *trqDelta* = 0 abgebaut. Die restlichen Größen sind entsprechend der beispielhaften Simulation aus Figur 3 gewählt.

**Patentansprüche**

1. Verfahren zum Betreiben einer Ausprüche Hybridantriebsvorrichtung, eines Fahrzeugs, insbesondere Kraftfahrzeugs, mit mindestens einem Verbrennungsmoton (1) und mindestens einer Elektromaschine (2) als Antriebsaggregate, die miteinander mechanisch gekoppelt sind, wobei in Abhängigkeit von einer Drehmomentanforderung, insbesondere gefilterte Drehmomentanforderung, die Antriebsvorrichtung in einem Normalbetrieb oder einem Dynamikbetrieb betrieben wird, und
in dem Normalbetrieb den Antriebsaggregaten (1,2) jeweils ein für das jeweilige Antriebsaggregat ideales Soll-Drehmoment vorgegeben wird,
wobei die idealen Soll-Drehmomente in Abhängigkeit von den aktuellen Betriebszuständen der Antriebsaggregate, der Antriebsvorrichtung und/oder eines elektrischen Bordnetzes des Fahrzeugs vorgegeben werden, **dadurch gekennzeichnet, dass** in dem Normalbetrieb mit dem von Verbrennungsmotor (1), und Elektromaschine (2) gemeinsam zu stellenden Antriebs-Solldrehmomen (*trqDesSum*) von einem vorgegebenen eventuell gefilterter, Antriebssollmoment (trqDesFlt), das der Drehmomentanforderung entspricht, abgewichen wird
und in dem Dynamikbetrieb, durch Abweichen eines oder mehrerer Aggregate (1, 2) von den momentan idealen Drehmomenten das zu stellende Antriebs-Solldrehmomen (*trqDesSum*) dem vorgegebenen Antriebssollmoment (*trqDesFlt*) genau entspricht, wobei zumindest einem der Antriebsaggregate (1; 2) ein Kompensations-Solldrehmoment zum Ausgleich einer Abweichung des Antriebs-Solldrehmoments von der Drehmomentanforderung vorgegeben wird.

2. Verfahren nach Anspruch 1, **dadurch gekennzeichnet, dass** der Dynamikbetrieb durch Erfassen des zeitlichen Verlaufes mindestens eines der Sold-Drehmomente ermittelt wird.

3. Verfahren nach einem der vorhergehenden Ansprüche, **dadurch gekennzeichnet, dass** der Dynamikbetrieb in Abhängigkeit mindestens eines vorgebbaren Schwellenwertes ermittelt wird.

4. Verfahren nach einem der vorhergehenden Ansprüche, **dadurch gekennzeichnet, dass** der Schwellenwert in Abhängigkeit eines momentanen Betriebszustands der Antriebsvorrichtung vorgegeben wird.

5. Verfahren nach einem der vorhergehenden Ansprüche, **dadurch gekennzeichnet, dass** das Antriebs-Solldrehmoment zumindest bei einem Übergang vom Normalbetrieb zum Dynamikbetrieb sprungfrei vorgegeben wird.

6. Verfahren nach einem der vorhergehenden Ansprüche, **dadurch gekennzeichnet, dass** die Soll-Drehmomente der Antriebsaggregate im Normalbetrieb, im Dynamikbetrieb und/oder beim Übergang vom Normal- in den Dynamikbetrieb sprungfrei vorgegeben werden.

7. Verfahren nach einem der vorhergehenden Ansprüche, **dadurch gekennzeichnet, dass** im Normalbetrieb der Gradient eines Antriebs-Solldrehmoments innerhalb eines vorgebaren Toleranzbandes um den Gradienten der Drehmomentanforderung vorgegeben wird.

8. Verfahren nach einem der vorhergehenden Ansprüche, **dadurch gekennzeichnet, dass** während eines Nulldurchgangs der Drehmomentanforderung das Antriebs-Solldrehmoment der Drehmomentanforderung gleichgesetzt wird.

9. Verfahren nach einem der vorhergehenden Ansprüche, **dadurch gekennzeichnet, dass** bei Erfassung einer externen Drehmomentbeeinflussung im Normalbetrieb in den Dynamikbetrieb gewechselt wird.

**Claims**

1. Method for operating a hybrid drive device, of a vehicle, in particular of a motor vehicle, having at least one internal combustion engine (1) and at least one electric machine (2) as drive units, which are mechanically coupled to one another, wherein depending on a torque request, in particular filtered torque request, the drive device is operated in a normal mode or in a dynamic mode, and in the normal mode a setpoint torque which is ideal for the respective drive unit is predefined for each of the drive units, wherein the ideal setpoint torques are predefined as a function of the current operating states of the drive units, the drive device and/or an electric on-board power system of the vehicle, **characterized in that** in the normal mode with the drive setpoint torque which is (trqDesSum), which is to be set jointly by the internal combustion engine (1) and the electric machine (2), there is a deviation from a predefined, possibly filtered, drive setpoint torque (trqDesFlt) which corresponds to the torque request,
and in the dynamic mode, due to deviation of one or more units (1, 2) from the instantaneous ideal torques, the drive setpoint torque (trqDesSum) which is to be set corresponds exactly to the predefined drive setpoint torque (trqDesFlt), wherein a compensation setpoint torque for equalizing a deviation of the drive setpoint torque from the torque request is predefined to at least one of the drive units (1; 2).

2. Method according to Claim 1, **characterized in that** the dynamic mode is determined by acquiring the time profile of at least one of the setpoint torques.

3. Method according to one of the preceding claims, **characterized in that** the dynamic mode is determined as a function of at least one predefinable threshold value.

4. Method according to one of the preceding claims, **characterized in that** the threshold value is predefined as a function of an instantaneous operating state of the drive device.

5. Method according to one of the preceding claims, **characterized in that** the drive setpoint torque is predefined without jumps at least during a transition from the normal mode to the dynamic mode.

6. Method according to one of the preceding claims, **characterized in that** the setpoint torques of the drive units are predefined without jumps in the normal mode, in the dynamic mode and/or during the transition from the normal mode to the dynamic mode.

7. Method according to one of the preceding claims, **characterized in that** in the normal mode the gradient of a drive setpoint torque is predefined within a predefinable tolerance band around the gradient of the torque request.

8. Method according to one of the preceding claims, **characterized in that** during a zero crossover of the torque request the drive setpoint torque is made equivalent to the torque request.

9. Method according to one of the preceding claims, **characterized in that**, when an external torque influence is sensed in the normal mode, the system is changed into the dynamic mode.

**Revendications**

1. Procédé de fonctionnement d'un dispositif d'entraînement hybride d'un véhicule, en particulier un véhicule automobile, comprenant au moins un moteur à combustion interne (1) et au moins une machine électrique (2) en tant que groupes motopropulseurs, qui sont accouplés l'un à l'autre mécaniquement, le dispositif d'entraînement fonctionnant en mode normal ou en mode dynamique en fonction d'une exigence de couple, notamment d'une exigence de couple filtrée, et dans le mode normal, un couple de consigne idéal pour le groupe motopropulseur respectif étant prédéfini pour les groupes motopropulseurs (1, 2),
les couples de consigne idéaux étant prédéfinis en fonction des états de fonctionnement actuels des groupes motopropulseurs, du dispositif d'entraînement et/ou d'un réseau de bord électrique du véhicule,
**caractérisé en ce que**
dans le mode normal, avec le couple de consigne d'entraînement (trqDesSum) commun à fournir par le moteur à combustion interne (1) et la machine électrique (2), on s'écarte d'un couple de consigne d'entraînement prédéfini, éventuellement filtré (trqDesFlt), qui correspond à l'exigence de couple,
et dans le mode dynamique, en écartant un ou plusieurs groupes (1, 2) des couples idéaux instantanés, le couple de consigne d'entraînement à fournir (trqDesSum) correspond exactement au couple de consigne d'entraînement prédéfini (trqDesFlt), un couple de consigne de compensation étant prédéfini pour au moins l'un des groupes motopropulseurs (1 ; 2), pour la compensation d'un écart du couple de consigne d'entraînement de l'exigence de couple.

2. Procédé selon la revendication 1, **caractérisé en ce que** le mode dynamique est déterminé par détection de l'allure dans le temps d'au moins l'un des couples de consigne.

3. Procédé selon l'une quelconque des revendications précédentes, **caractérisé en ce que** le mode dynamique est déterminé en fonction d'au moins une valeur seuil prédéfinissable.

4. Procédé selon l'une quelconque des revendications précédentes, **caractérisé en ce que** la valeur seuil est prédéfinie en fonction d'un état de fonctionnement instantané du dispositif d'entraînement.

5. Procédé selon l'une quelconque des revendications précédentes, **caractérisé en ce que** le couple de consigne d'entraînement est prédéfini au moins dans le cas d'un transfert du mode normal au mode dynamique sans saut.

6. Procédé selon l'une quelconque des revendications précédentes, **caractérisé en ce que** les couples de consigne des groupes motopropulseurs en mode normal, en mode dynamique et/ou en cas de transition entre le mode normal et le mode dynamique sont prédéfinis sans saut.

7. Procédé selon l'une quelconque des revendications précédentes, **caractérisé en ce que** dans le mode normal, le gradient d'un couple de consigne d'entraînement est prédéfini à l'intérieur d'une plage de tolérances prédéfinissable dans la plage du gradient de l'exigence de couple.

8. Procédé selon l'une quelconque des revendications précédentes, **caractérisé en ce que** pendant un passage à zéro de l'exigence de couple, le couple de consigne d'entraînement est posé comme égal à l'exigence de couple.

9. Procédé selon l'une quelconque des revendications précédentes, **caractérisé en ce que** lors de la détection d'une influence extérieure du couple en mode normal, on passe en mode dynamique.

Fig. 1

Fig. 2

Fig. 3

**Fig. 4**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102004044507 A1
- DE 102005018437 A1
- DE 102005060858
- DE 102006016133